# EUROPEAN PATENT SPECIFICATION

(11) **EP 4 442 449 B1**
(45) Date of publication and mention of the grant of the patent: **12.08.2026**
(21) Application number: 23166621.5
(22) Date of filing: 04.04.2023
(51) Int. Cl.: B32B 3/26, B32B 5/02, B32B 5/26, B32B 7/05

(54) **POUCHED PRODUCT**
BEUTELPRODUKT
PRODUIT EN SACHET

(43) Date of publication of application: 09.10.2024
(73) Proprietor: Swedish Match North Europe AB, 118 85 Stockholm (SE)
(72) Inventor: ELFSTRAND, Andreas, 431 34 Mölndal (SE)
(74) Representative: Valea AB

(56) References cited:
- US-A1- 2010 218 779
- US-A1- 2016 073 689
- US-A1- 2018 153 212
- US-A1- 2021 251 276

## Description

### TECHNICAL FIELD

The disclosure relates to a pouched product for oral use, comprising a saliva-permeable pouch and a filling material contained by the pouch.

### BACKGROUND OF THE INVENTION

The oral pouched products as disclosed herein may be tobacco-free or substantially tobacco-free products as well as tobacco products. Such products are provided in the form of a pouch containing a filling material and are sized and configured to be accommodated in the oral cavity of a user, such as between the gum and upper lip of a user.

Various nonwoven materials are widely used for forming pouches which are used for enclosing filling material and thereby forming a pouched products for oral use. The filling material may comprise nicotine and flavours.

It has been observed that a large proportion of flavour or nicotine contained in the filling material does not reach the consumer. Hence, the release of flavour and/or nicotine is inhibited.

WO 2021/116884 A1 discloses an oral pouched product in the form of a porous pouch defining a cavity containing a composition adapted for oral use, wherein the porous pouch is formed from a fleece material comprising two or more layers, wherein the two or more layers are in direct contact with another.

US 2014/026912 AA discloses a fleece for a smokeless tobacco pouch, wherein the fleece is formed with apertures. Also disclosed is a method for manufacturing the fleece. The method comprises a hydroentanglement step during which apertures are formed in the fleece.

US2021251276 and US2016073689 disclose further types of tobacco pouches.

### SUMMARY OF THE INVENTION

It is an object of the present invention to allow for a high and/or quick release of compounds contained in the filling material upon use, while providing an appealing mouthfeel and satisfactory sealing properties of the pouch.

A further object of the present invention is to allow for a sufficient seal strength of the pouch, while providing an appealing mouthfeel.

These objects, as well as other objects being apparent to a skilled person studying the present description, are achieved by the pouched product for oral use as set out in the appended claims.

The present disclosure is directed to a pouched product for oral use, comprising a saliva-permeable pouch and a filling material contained by the pouch. The pouch comprises a first nonwoven enclosing the filling material, and a second nonwoven surrounding the first nonwoven. One or more opening(s) is/are provided in the second nonwoven, through which opening(s) the first nonwoven is exposed.

It has been observed that a large proportion of flavour or nicotine contained in the filling material remain in the pouch material i.e., in the nonwoven enclosing the filling material, during usage. Thus, a lot of the nicotine and flavour never reaches the user. The present disclosure is based on the surprising finding that the combination of two different nonwovens, a first and second nonwoven, in combination with one or more opening(s) in the second nonwoven, provides a high and/or quick release of compounds contained in the filling material upon use, while providing an appealing mouthfeel and satisfactory sealing properties of the pouch. Also, it has been observed that this combination of two different nonwovens, allow for a sufficient seal strength of the pouch, while providing an appealing mouthfeel.

Herein the term *"pouched product for oral use"* refers to a portion of a smokeless composition containing saliva extractables and being packed in a saliva-permeable pouch material. The pouched product for oral use is not intended to be swallowed.

Herein the term *"surrounding"* includes that the first and second nonwovens, are joined over parts of the surface. Also, although the second nonwoven comprises one or more opening(s), or forms seals together with the first nonwoven, it shall be interpreted as surrounding the first nonwoven.

Herein the term *"filling material"* refers to the material inside the pouch of an oral pouched product as disclosed herein. The filling material may be a filling material predominantly constituted by tobacco material or may be a filling material based on non-tobacco material such as particles of cellulose, starch, silica, botanical fibres other than tobacco fibres, synthetic fibres, etc. The filling material may comprise components such as salts (e.g., sodium chloride, potassium chloride, magnesium chloride, calcium chloride and any combination thereof), pH adjusters (e.g., sodium hydroxide, potassium hydroxide, potassium carbonate, sodium carbonate, sodium carbonate or sodium bicarbonate) flavouring agents, sweeteners, colorants, humectants (e.g., polypropylene glycol or glycerol), antioxidants, preservatives (e.g., potassium sorbate), binders, tobacco and non-tobacco material. The filling material, such as plant material, cellulose and starch may be present in the form of particles or as a combination of particles and fibres. For instance, the filling material may comprise or consist of particles. The particles may have a median particle size of up to 2 mm. The particles are preferably particles or granules of microcrystalline cellulose (MCC). The filling material may further contain an active ingredient such as nicotine.

The pouched product as disclosed herein comprises opening(s) in the second nonwoven, wherein the opening(s) may be formed by removal of portion(s) of the second nonwoven. Any conventional method such as for example punching, drilling, cutting, water jets or laser may be used to remove portion(s) of the second nonwoven and thereby provide opening(s) in the second nonwoven. The opening(s) in the second nonwoven may thus be made in a pre-manufactured nonwoven. Accordingly, the opening(s) as disclosed herein does not refer to openings, such as pores, resulting from of a process of hydroentanglement of a nonwoven.

The pouched product as disclosed herein may have only one opening. Alternatively, the pouched product as disclosed herein may have several openings. Further, the opening(s) may be located anywhere on the pouch. Preferably, there is/are no opening(s) in a longitudinal seal of the pouch. Further, the opening(s) may have any desired shape, such circular, oval, square, rectangle, and star.

The pouched product as disclosed herein comprises opening(s), wherein the one or more opening(s) may have an opening area of at least 3 mm², preferably in the range from 3 mm² to 80 mm², such as in the range from 10 mm² to 60 mm², such as in the range from 20 mm² to 40 mm². This means that a single opening of the one or more opening(s) may have an opening area of at least 3 mm², preferably in the range from 3 mm² to 80 mm² such as in the range from 10 mm² to 60 mm², such as in the range from 20 mm² to 40 mm².

The opening(s) as disclosed herein may have a total area of at most 70% of the total area of the surface of the pouch, preferably in the range of 20-50 % of the total area of the surface of the pouch. The total area of the opening(s) infers herein the aggregated area of all opening(s). The opening(s) as disclosed herein may be present in the seals. Preferably, there is/are no opening(s) in the longitudinal seals of the pouch.

Accordingly, the total area of opening(s) may comprise several smaller openings or fewer larger opening(s) or a combination thereof.

The pouched product as disclosed herein comprises a first nonwoven, wherein the first nonwoven may comprise or consist of thermoplastic polymer fibres. Thermoplastic polymer fibres are in general transparent and thereby, the opening(s) in the second nonwoven will form a window in the pouch as disclosed herein through which the first nonwoven may be exposed and accordingly the filling material may be visible. Further, thermoplastic polymer fibres are not prone to staining, thus the first nonwoven will not be stained by the filling material. Further, as the first nonwoven, to some extent, functions as a barrier between the filling material and the second nonwoven, the second nonwoven will be exposed to no or low staining. Accordingly, the pouch will not significantly change colour during storage but will remain significantly non-stained and neat.

Typically, thermoplastic polymer fibres, comprised in a nonwoven used in a pouch for oral products, is melted upon heating and contributes to forming a seal. Further, thermoplastic polymer fibres have a great resistance and thereby formed sealings of the pouch will not be negatively affected, i.e., broken down, by strong flavours or fluids present in the filling material. Accordingly, sealing strength of the pouched product as disclosed herein will not be significantly affected by the filling material.

The thermoplastic polymer fibres in the first nonwoven as described herein may be selected from the group consisting of polypropylene (PP), polythene (PE), polylactic acid (PLA), polyethylene terephthalate (PET), polyhydroxyalkanoate (PHA), polybutylene succinate (PBS) and any combination thereof. These thermoplastic polymer fibres have been found to contribute to an excellent nicotine and flavour release as well as an appealing appearance of the product, Also, as the thermoplastic polymer fibres *per se* are soft, the part(s) of the first nonwoven comprising thermoplastic polymers that meets a user's oral cavity contributes to an agreeable mouth feel of the product. Preferably, the thermoplastic polymer fibres in the first nonwoven as described herein are polypropylene.

The pouched product as disclosed herein comprises a first nonwoven, wherein the basis weight of the first nonwoven may be in the range of from 8 gsm to 27 gsm, such as in the range of 8 gsm to 20 gsm, such as in the range of 8 gsm to 15 gsm. Such a basis weight has the effect of that an excellent extraction of nicotine from the filling material to the user may be achieved. Further, this has the effect of rendering the first nonwoven a high transparency (low opacity) which in turn means that the filling material can be seen through the first nonwoven. Thus, an appealing pouch product where the first nonwoven may be exposed, and accordingly, the filling material becomes visible and may be seen when looking through the first nonwoven.

The pouched product as disclosed herein comprises a first nonwoven, wherein the first nonwoven may be spunbonded. Such a spunbonded nonwoven has been found to provide a highly transparent nonwoven, i.e., having a low opacity. In particular, nonwovens obtained from spunbonded polypropylene are found to have a high transparency.

The pouched product as disclosed herein comprises a second nonwoven, wherein the second nonwoven may comprise or consist of cellulosic fibres, such as regenerated cellulose fibres, such as viscose fibres or lyocell fibres, such as viscose fibres. It is well known that oral pouched products comprising or consisting of cellulosic fibres, such as regenerated cellulose fibres, such as viscose fibres or lyocell fibres, such as viscose fibres generate a soft and comfortable pouched product with improved organoleptic properties for the user. However, it has been found that the delivery of nicotine and flavour may be limited as a large portion of the flavour portions or nicotine remain in the pouch material during usage and not being extracted.

Pouches made by nonwoven of only thermoplastic polymer fibres generally form stiff and sharp seals that are not pleasant for the mouth. Further, a thermoplastic polymer fibre nonwoven as is disclosed herein as the first nonwoven is unwieldly and thin and would therefore be difficult to pass through a pouching machine. However, it has been found that by adding a second nonwoven comprising or consisting of cellulosic fibres to a first nonwoven comprising or consisting of thermoplastic polymer fibres, a more stable framework is generated which more easily can be handled in the pouching machine. Also, by having the first nonwoven surrounded by the second nonwoven comprising or consisting of cellulosic fibres, the obtained sealings of the pouch, will generate a much more agreeable mouth feel.

Hence, by combining a first nonwoven comprising or consisting of thermoplastic polymer fibres having beneficial release properties for compounds in the filling material, with a second nonwoven comprising or consisting of cellulosic fibres, it is possible to provide sufficient seal strength when using a nonwoven comprising or consisting of cellulosic fibres.

The first and second nonwoven may be manufactured separately and thereafter brought in contact with each other prior to being passed through a pouch machine. The openings in the second nonwoven may be punched in an already produced nonwoven. The first and second nonwovens may be put in contact with each other and may be joined only in the seals. The filling material fills out the pouch so that the two nonwovens may be brought in direct contact with each other over the substantially entire pouch. Further, the two nonwovens may be joined together over substantially the entire pouch. Any method, for joining the two nonwovens over substantially their entire respective surface may be used, such as heat sealing, adhesives, punch needling.

The pouched product as disclosed herein comprises a second nonwoven, wherein the second nonwoven may be hydroentangled. Further, the second nonwoven as disclosed herein may be dry laid or wet laid.

The pouched product as disclosed herein comprises a second nonwoven, wherein the second nonwoven may be free from binder, such as thermal binder and chemical binder, such as binder fibre, adhesives and chemicals bonding the nonwoven. It has been found that when the first nonwoven comprises or consists of thermoplastic polymer fibre, the second nonwoven does not *per se* need to be sealable. Hence, the second nonwoven disclosed herein does not need to comprise any binder bonding the nonwoven in order to achieve the pouch sealings when combined with the first nonwoven. Accordingly, a framework comprising a first and a second nonwoven as disclosed herein will be able to produce sealed pouches without addition of binder.

Alternatively, the second nonwoven may contain a binder chemically bonding the nonwoven, preferably vinyl acrylate binders. These binders are soft.

The pouch material used in pouched products for oral use, also called the packaging material, can be a dry-laid bonded nonwoven comprising viscose rayon fibres, i.e. regenerated cellulose, and a polymer that acts as binder in the nonwoven material and contributes to sealing of the pouches during manufacturing thereof, although other types of nonwoven material may be utilized as well.

Nonwovens are fabrics that are neither woven nor knitted. Methods for the manufacturing of nonwoven materials are commonly known in the art. Further information on nonwovens is found in "Handbook of Nonwovens" by S. Russel, published by Woodhead Publ. Ltd., 2007.

Nonwoven properties depend, for instance, on the fibres used, the method used for web production and the method used for bonding of the web.

In view of the fibres used, nonwovens may be classified as staple fibre nonwoven or continuous filament nonwoven.

In view of the web production method used, nonwovens may be classified as wet-laid, dry-laid, spun laid or melt blown nonwoven.

Continuous filament nonwoven may comprise spun laid or melt blown webs.

Staple fibre nonwoven may comprise dry-laid or wet-laid webs.

Dry-laid webs may be carded or airlaid. If carded, the manufacturing process may result in fibres substantially being oriented in the carding direction. Dry-laid nonwoven may comprise parallel laid web, cross laid webs or randomly laid webs. Parallel laid webs and cross laid webs normally include two or more superimposed web layers, which normally are carded, while randomly laid webs normally include a single web layer, which may be airlaid.

Several methods may be used to bond together the fibres in the web, also called web consolidation. The different types of bonding methods may be classified as mechanical bonding, e.g. needle punching, stitch bonding, hydroentanglement, as chemical bonding, e.g. saturation bonding, spray bonding, foam bonding, powder bonding, print bonding and as thermal bonding, e.g. hot calendering, through-air thermal bonding, ultrasonic bonding, radiant-heat bonding. More than one bonding method may be used to consolidate the nonwoven.

In chemical bonding, a binder, also called bonding agent or adhesive, is combined with the fibres. This type of nonwoven is generally called chemically bonded or adhesive bonded nonwoven.

Regenerated fibres, which are also called semi-synthetic fibres, are normally cellulose regenerated fibres, also called reconstituted cellulosic fibres, such as rayon. The regenerated cellulose used in the manufacturing of rayon fibres is normally derived from wood pulp, but regenerated cellulose from other origins, such as bamboo, may also be used.

Viscose rayon staple fibres may be formed by extruding a viscose solution. i.e. a solution of cellulose xanthate, through a spinneret and as the viscose exits the spinneret, it lands in a bath of mineral acid, such as sulfuric acid, resulting in the formation of filaments. These filaments are then cut to a desired length, thereby forming staple fibres.

Lyocell is a form of rayon made from dissolving pulp, i.e. bleached wood pulp.

The pouched product as disclosed herein comprises a filling material, wherein the filling material may comprise a smokeless non-tobacco material, such as a nicotine containing smokeless non-tobacco material. The pouched product comprising a smokeless non-tobacco material may further contain trace amounts of tobacco, such as below 0.05 wt%. The filling material comprising a smokeless non-tobacco material, may further comprise a flavour compound. Alternatively, the pouched product comprising a smokeless non-tobacco material may further contain tobacco in the range of from 5 wt% to 10 wt%, i.e., a low-tobacco product.

The pouched smokeless low tobacco products for oral use may contain added nicotine, i.e. nicotine in addition to the nicotine of the tobacco. Alternatively, they contain no added nicotine and the nicotine is only provided by the tobacco in the product.

The pouched tobacco product, non-tobacco product or low-tobacco products for oral use as disclosed herein may comprise non-tobacco plant material and/or other types of filling material. Examples of non-tobacco plant material includes plant fibres selected from the group consisting of maize fibres, oat fibres, tomato fibres, barley fibres, rye fibres, apple fibres, sugar beet fibres, potato fibres, corn fibres, buckwheat fibres, cocoa fibres, bamboo fibres, citrus fibres and any combinations thereof. Also processed fibres such as microcrystalline cellulose (MCC) fibres, synthetic polymeric fibres, etc. may be used. The filling material, such as plant material, cellulose and starch may be present in the form of particles or as a combination of particles and fibres. For instance, the filling material may comprise or consist of particles of microcrystalline cellulose.

The pouched non-tobacco products for oral use as disclosed herein may contain an active ingredient such as nicotine, i.e., they may be pouched nicotine-containing products for oral use. Alternatively, the pouched non-tobacco products for oral use may be free from nicotine, i.e., they may be pouched nicotine-free smokeless products for oral use.

The nicotine in a nicotine containing tobacco free or low tobacco content composition may be synthetic nicotine and/or nicotine derived from tobacco plants. Further, the nicotine may be present in the form of nicotine base or a nicotine salt such as nicotine hydrochloride, nicotine dihydrochloride, nicotine monotartrate, nicotine bitartrate, nicotine bitartrate dihydrate, nicotine sulphate, nicotine zinc chloride monohydrate, nicotine salicylate, nicotine benzoate, nicotine polacrilex or a combination thereof.

The nicotine salt may be free, i.e. it is mixed with the other components of the product without combining chemically with said components. Additionally or alternatively, the nicotine salt may combine chemically with one or more components of the products. For instance, the nicotine salt may combine with alginate particles or cellulose.

The pouched non-tobacco products for oral use as disclosed herein may contain an active ingredient such as cannabinoids. The cannabinoids which are contemplated for the oral smokeless products as disclosed herein may be one of more of the following: tetrahydrocannabinol (THC), tetrahydrocannabinolic acid (THCA), cannabidiol (CBD), cannabidiolic acid (CBDA), cannabinol (CBN), cannabigerol (CBG), cannabichromene (CBC), cannabicyclol (CBL), cannabivarin (CBV), tetrahydrocannabivarin (THCV), cannabidivarin (CBDV), cannabichromevarin (CBCV), cannabigerovarin (CBGV), cannabigerol monomethyl ether (CBGM), cannabielsoin (CBE) and cannabicitran (CBT).

Caffeine is also a well-known stimulant which may be used as an active agent in the oral smokeless products as disclosed herein. Further active agents which may be used in an oral smokeless product as disclosed herein are ginseng, taurine and branched-chain amino acids (BCAA). The oral smokeless product may comprise a combination of the active agents.

The pouched product as disclosed herein comprises a filling material, wherein the filling material may comprise a smokeless tobacco material.

Addition of a small amount of tobacco to the pouched non-tobacco products for oral use provides a pouched smokeless low tobacco snuff product for oral use. Thus, in addition to a small amount of tobacco, the product comprises non-tobacco plant material as described herein and/or a filling material, such as MCC, as described herein. The composition of the pouched smokeless low tobacco snuff product for oral use may be identical to the composition of the pouched smokeless non-tobacco product for oral use except for the presence of a small amount of tobacco.

The filling material comprising a smokeless tobacco material, may further comprise a flavour compound.

The terms *"flavour"* is used herein for substances used to influence the aroma and/or taste of the oral pouched product, including, essential oils, single flavour compounds, compounded flavourings, and extracts.

The pouched product as disclosed herein comprises a filling material, wherein the filling material may comprise nicotine. Further, the pouch as disclosed herein, may be configured to allow for an extraction of nicotine of from 35% to 90%, such as from 45% to 90%, such as 50% to 80% of the nicotine initially present in the filling material within 30 minutes of usage. It has surprisingly been found that the extraction of nicotine from the filling material enclosed in a pouched product as disclosed herein is significantly increased compared to the extraction of nicotine from conventional pouch products. This is further illustrated in example 1. Accordingly, the pouched product as disclosed herein is found to enhance the release of nicotine from the filling material and thus improve the consumers' experience. Further, a reduced binding of nicotine and/or flavour in the pouch material would reduce the amount needed to be added.

The pouched product as disclosed herein comprises a filling material, wherein the filling material may comprise a flavour compound. Further, the pouched product as disclosed herein, may be configured to allow for an extraction of flavour compound, of from 10% to 45%, such as from 10% to 30% of the flavour compound initially present in the filling material within 30 minutes of usage.

It has surprisingly been found that the extraction of flavour compound from the filling material enclosed in a pouched product as disclosed herein is significantly increased compared to the extraction of flavour compound from conventional pouch products. This is further illustrated in example 1.

The filling material may further comprise one or more of the following: water, salt (e.g. sodium chloride, potassium chloride, magnesium chloride, calcium chloride and any combinations thereof), pH adjuster, flavouring agent, cooling agent, heating agent, sweetening agent, colorant, humectant (e.g. propylene glycol or glycerol), antioxidant, preservative (e.g. potassium sorbate), binder, disintegration aid.

The pouched non-tobacco product for oral use or the pouched low tobacco product for oral use may be dry, semi-dry or moist. Generally, dry pouched non-tobacco products for oral use or dry pouched low tobacco product have a moisture content of less than 10 wt% and moist pouched non-tobacco products for oral use or moist pouched low tobacco products have a moisture content of above 40 wt%. Semi-dry pouched non-tobacco products for oral use or semi-dry pouched low tobacco products have a moisture content between 10 wt% and 40 wt%.

The pouched non-tobacco product for oral use or the pouched low tobacco product for oral use may be flavourized by mixing the flavour with the smokeless non-tobacco product components or the smokeless snuff product components during manufacturing. Additionally or alternatively, the flavour may be added to the smokeless non-tobacco product for oral use or smokeless snuff product for oral use after it has been manufactured. For instance, the flavour may be added to at least one inside surface of the container for the product. The flavour will then be imparted to the product when the container is closed. In a further example, the flavour may be sprayed directly onto the manufactured smokeless non-tobacco product or smokeless low tobacco snuff product.

The pouched product as disclosed herein comprises a first nonwoven, wherein the first nonwoven may have an opacity of from 15 to 30, such as from 15 to 25, such as from 15 to 20 at Yc/2° spectral response measured with ColorFlex EZ according to the method ASTM E1164. A nonwoven, comprising spunbonded, thermoplastic fibres and having a surface weight in the range of from 8 gsm to 27 gsm contributes to low opacity. Opacity values between 15 to 30 at Yc/2° spectral response contributes to a desirable opacity. This is further illustrated in Example 2.

The pouched product as disclosed herein may comprise two opposing end seals, wherein the seal strength of the end seals may be equal to or above 0.1 N/mm, such as in the range from 0.3 N/mm to 0.7 N/mm, such as in the range of 0.35 N/mm to 0.7 N/mm, such as in the range of 0.43 N/mm to 0.7 N/mm according to the sealing strength method ASTM F88 measured at 10 mm/min.

The seal strength should be sufficient to preserve the integrity of the pouched product while not being hard or stiff which may detract from a consumer's experience during use of the product. When the second nonwoven does not comprise a binder bonding the nonwoven it would not be possible to weld the second nonwoven alone. Further, welding of the first nonwoven alone would generate hard and stiff seals. However, it has surprisingly been found that when welding the first and second nonwoven when forming a pouch where the second nonwoven surrounds the first nonwoven, a seal with an excellent seal strength is accomplished. With the aid of the first nonwoven, it is thus possible to weld a non-weldable second nonwoven. Further, the accomplished seals are soft and have a pleasant mouthfeel for user.

Sealing of the pouches of the pouched product for oral use may for example be performed by means of heat or by ultrasonic energy. It is in that case desirable that the pouch material comprises a component, e.g. a thermoplastic polymer, which is reactive to the heat or ultrasonic energy, such that this component contributes to the sealing of the pouch. This component may be a binder, as mentioned above, or may form a staple fibre or a continuous filament.

As an alternative or a complement, sealing may be performed by means of glue or adhesive. As yet an alternative or a complement, sealing may be performed by mechanical edge embossing, with or without heat.

In another aspect, the invention relates to a user container comprising a pouched product as disclosed herein.

A user container typically comprises in the range of 10-30 pouched products for oral use, such as in the range of 20-25 pouched products. The pouched products may be placed randomly in the user container or in a pattern, for instance as described in WO 2012/069505. The user container as disclosed herein is a consumer package having a shape and a size adapted for conveniently carrying the package in a pocket or in a handbag and may be used for packaging any known type of pouched product for oral use.

### BRIEF DESCRIPTION OF THE DRAWINGS

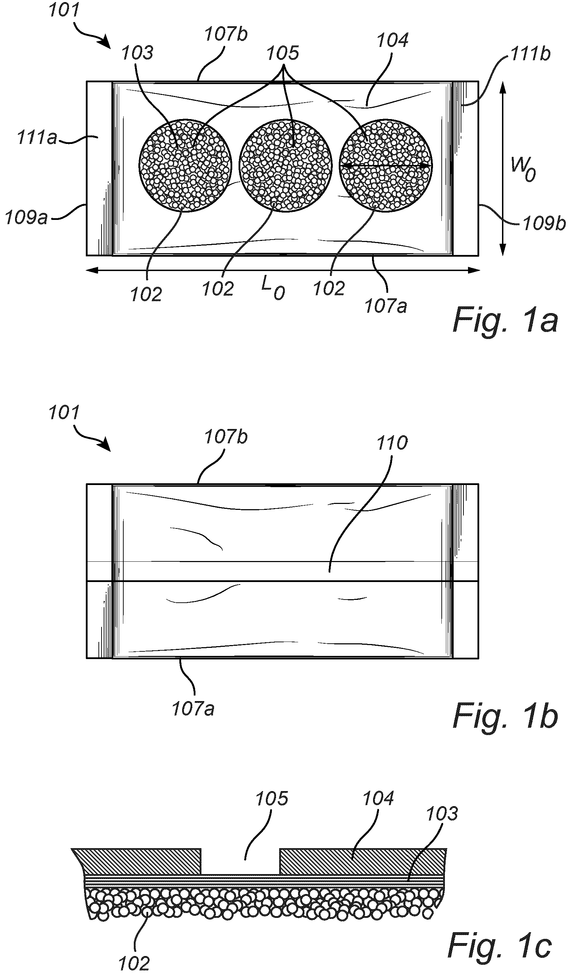

- Figure 1a: shows a top view of an embodiment of a pouched product as disclosed herein;
- Figure 1b: shows an underneath view of an embodiment of a pouched product as disclosed herein;
- Figure 1c: shows a cross-section of an embodiment of a first and second nonwoven in contact with each other.

### DETAILED DESCRIPTION

It should be understood that the drawings are schematic, and that individual features and components, are not necessarily drawn to scale.

Figure 1a schematically illustrates a top view of a pouched product for oral use as disclosed herein. The pouched product 101 as shown in Figure 1a has rectangular shape with a maximum length of L₀ extending in a length direction and a maximum width W₀ extending in a with direction, whereby the maximum length L₀ is greater than the maximum width W₀. The pouched product as shown in Figure 1a comprises a filling material 102 and a saliva permeable pouch enclosing the filling material. The pouch is made up by two nonwovens, a first nonwoven 103 and a second nonwoven 104, which lie in contact with each other and together enclose the filling material 102.

The second nonwoven 104 is surrounding the first nonwoven 103. The second nonwoven 104 is provided with one or more opening(s) 105 through which opening(s) the first nonwoven 103 is exposed. The opening(s) 105 in the second nonwoven 104 is/are made by removing a portion(s) of the second nonwoven 104 before putting the first 103 and second 104 nonwoven in contact with each other. In this embodiment of the invention, the openings are circular.

The pouched product 101 as shown in Figure 1a comprises two long side edges 107a, 107b and two short edges 109a, 109b. The pouched product 101 as shown in Figure 1a also has an extension in a height direction, being perpendicular to the length direction and to the width direction, however not seen in this perspective.

The rear side of the pouched product 101 as shown in Figure 1b comprises at least one seal 110 extending in the length direction. Typically, and as illustrated in Figure 1b, there is a single seal 110 extending in the length direction. This seal is often called longitudinal seal, since, when manufacturing the pouch product as shown in Figure 1a and 1b, this seal is made along the direction of travel of the webs forming the pouch. The longitudinal seal is often positioned apart from the long side edges 107a, 107b. Thereby it is often preferred to position it at or close to the longitudinal centerline, as is illustrated in Figure 1b. The longitudinal seal 110 may be made by any method known to the skilled person, e.g., by means of heat-welding and/or ultrasonic sealing.

Further, the pouched product 101 as shown in Figure 1a and 1b comprises two seals 111a, 111b extending in the with direction. The two seals 111a, 111b seal the two short side edges 109a, 109b and thus form edge seals. The seals 111a, 111b are often called transverse edge seals, since, when manufacturing the pouch product 101 as shown in Figure 1a and 1b, these edge seals are made transverse to the direction of travel of the webs forming the pouch. The transverse edge seals 111a, 11b may be made by any method known to the skilled person, e.g., by means of heat-welding and/or ultrasonic sealing. Since the transverse edge seals 111a, 111b are made after the longitudinal seal 110, i.e., downstream of the longitudinal seal 110 in the manufacturing apparatus, the longitudinal seal 110 is included in the transverse edge seals 111a, 111b, i.e., the longitudinal seal 110 forms part of the transverse edge seals 111a, 111b, e.g., the longitudinal seal 110 being welded into the transverse edge seals 111a, 111b.

Figure 1c provides a schematic view of a first nonwoven 103 in contact to a second nonwoven 104, where there is an opening 105 in the second nonwoven 104. The first nonwoven 103 can be in contact with the filling material 102. Only the first nonwoven 103 is in contact with the filling material 102 and the second nonwoven 104 surrounds the first nonwoven 103.

### EXAMPLES

### Example 1

The example illustrates the release of nicotine and flavour, respectively, contained in a filling material, through a nonwoven, that may act as a first nonwoven according to the present invention.

The release of flavour and nicotine, from two types of pouch materials enclosing a filling material comprising granulate microcrystalline cellulose (MCC), nicotine and flavour, were studied.

Two different types of pouch materials were used to enclose the filling material:
* Standard pouch material comprising a nonwoven having a surface weight area of 29 gsm (hereafter referred to as STAND) wherein the nonwoven comprises viscose and binder.
* Nonwoven comprising polyethylene and polypropylene having a surface weight area of 8-20 gsm (hereafter referred to as PE/PP).

The respective pouches, i.e., the two investigational products, comprising the filling material were manufactured according to conventional methods. The two flavoured products, all units (pouches) containing 6 mg of nicotine, 8.12 mg of flavour, and weighing 0.4 g, were thus enclosed in either STAND or PE/PP pouch material.

Twenty subjects were administered repeated single doses of the two investigational products in a pre-determined randomized order. The subjects were administered the investigational products on one study day, with 30 minutes usage and 30 minutes intervals between the two investigational products.

After use, the samples were collected and put in freezer (-20°C) prior analysis. Thereafter, the amount of nicotine and flavour, respectively were measured. Regarding the flavour, the amount of methyl salicylate, as is an indicator of the flavour, was measured.

In this study, a method to assess both nicotine and flavour, in form of the indicator methyl salicylate, from the same pouch was performed in order to investigate the difference in the extracted amount (mg/pouch) and extracted fraction (%) of nicotine respective methyl salicylate through the two different pouch materials (STAND and PE/PP).

As a reference, unused samples of STAND respective PE/PP samples were used, i.e., samples that have not been exposed to a consumer's mouth.

All pouches were cut in half. To the reference samples, 400 µL 2-propanol was added and were let to stand for 5 minutes at room temperature (20-22°). Thereafter, 2 mL tap water was added to all samples, i.e., to both reference samples and samples from the study, before being shaken, at 360 rpm (rotation per minute), for 5 minutes at room temperature. 10 mL methyl tertiary-butyl ether (MTBE) and 100 µL standard (n-dekanol as standard in analysis of the flavour; kinolin as standard in analysis of nicotine) was thereafter added and the samples were shaken, at 360 rpm, for 60 minutes at 50°C. The samples were allowed to cool at room temperature for 60 minutes. 400 µL of this extract was used for analysis of the flavour (methyl salicylate) using GC-MS. 500 µL 12M NaOH was added to the remaining sample and shaken, at 360 rpm, for 15 minutes at room temperature, and allowed to stand for 60 minutes before analysis of nicotine using GC-MS.

### The following GC-MC apparatus and parameters were used:

GC/MS-system comprising Agilent 7890A GC, 7693A autosampler and 5975C MS.
Column: Agilent Innowax, 60 m x 0.25 mm ID and 0.25 µm film thickness.
Liner: Split, 850 µl with deactivated glaswool.

### GC- parameters:

### Injector

| | |
|---|---|
| Carrier gas: | Helium |
| Carrier gas flow: | 1 ml/min (constant flow) |
| Method of injection: | Split |
| Split flow: | 100 ml/min |
| Injection volume: | 1 µl |
| Injector temperature: | 225°C |
| Wash bottles: | A = water, B = Aceton |

### Temperature program GC

| | |
|---|---|
| Initial temp | 100°C |
| Initial time | 0.3 min |
| Rate 1 | 7°C/min |
| Temp 1 | 150°C |
| Time 1 | 0 min |
| Rate 2 | 20°C/min |
| Temp 2 | 240°C |
| Time 2 | 3 min |
| Equilibration time | 0.25 min |
| Run time | 14.94 min |

### MS-parameters:

| | |
|---|---|
| Mode | scan (15-250 amu) |
| Solvent delay | 5 min |
| EMV mode | Gain Factor (0.80) |
| Tune | autotune |

Differences in the extracted amount and fraction of flavour (methyl salicylate) and nicotine were analysed using signed Wilcoxon rank sum test (Statistica, Statsoft).

The basis for the calculations of the extracted amount and fractions, were calculated using the measured mean flavour (methyl salicylate) and nicotine concentration, respectively, of reference pouches together with the measured unused pouch weight, and the respectively measured flavour (methyl salicylate) and nicotine content after use of the tested pouches.

The mean and standard deviation (SD) as well as the median and minimum and maximum (min-max) content of flavour (methyl salicylate) and nicotine and pouch weight of ten unused reference pouches are summarized and presented in Table 1.

**Table 1. Flavour (methyl salicylate) and nicotine content and pouch weight of reference pouches.**

| Assessment | Type of pouch | Mean (SD) | Median (min-max) |
|---|---|---|---|
| Flavour (methyl salicylate) (mg/unit) | STAND | 11.11 (0.36) | 11.19 (10.34-11.55) |
| | PE/PP | 8.83 (0.38) | 8.76 (8.38-9.38) |
| Nicotine (mg/unit) | STAND | 5.54 (0.08) | 5.53 (5.41-5.68) |
| | PE/PP | 5.68 (0.05) | 5.69 (5.58-5.76) |
| Weight (g) | STAND | 0.393 (0.001) | 0.393 (0.391-0.394) |
| | PE/PP | 0.392 (0.002) | 0.393 (0.390-0.396) |

| | | | |
|---|---|---|---|
| (n=10/product) | | | |

The extracted amounts and fractions of nicotine after 30 min of usage are summarized and presented in Table 2. Twenty pouches were measured, and the mean value and the median are presented in the table.

**Table 2. Extracted amount and fraction of nicotine after 30 minutes of usage.**

| Assessment | Type of pouch | Mean (SD) | Median (min-max) |
|---|---|---|---|
| Extracted amount (mg/unit) | STAND | 1.99 (0.86) | 2.02 (-0.05-3.65) |
| | PE/PP | 2.37 (1.11)* | 2.19 (0.31-4.95)* |
| Extracted fraction (%) | STAND | 36.1 (15.6) | 36.6 (-0.30-65.8) |
| | PE/PP | 41.9 (19.6)* | 38.6 (5.53-86.8)* |

| | | | |
|---|---|---|---|
| The signed Wilcoxon rank sum test *p<0.01 (n=20/product) | | | |

It was observed that the extracted amount of nicotine for PE/PP was significantly higher compared to STAND (p<0.05). Also, the extracted fraction (%) of nicotine for PE/PP was significantly higher compared to STAND (p<0.05).

The extracted amounts and fractions of flavour, in the form of the indicator methyl salicylate, after 30 min of usage are summarized and presented in Table 3. Twenty pouches were measured, and the mean value and the median are presented in the table. For unknown reason, STAND contained more methyl salicylate compared to PE/PP influencing the comparison of the extracted amount but not the extracted fraction of methyl salicylate.

**Table 3. Extracted amount and fraction of flavour (methyl salicylate) after 30 minutes of usage.**

| Assessment | Type of pouch | Mean (SD) | Median (min-max) |
|---|---|---|---|
| Extracted amount (mg/unit) | STAND | 1.04 (0.62) | 0.99 (0.15-2.20) |
| | PE/PP | 1.43 (1.00) | 1.25 (-0.20-3.73) |
| Extracted fraction (%) | STAND | 9.4 (5.6) | 8.9 (1.3-19.9) |
| | PE/PP | 16.2 (11.4)** | 14.2 (-2.3-42.1)** |

| | | | |
|---|---|---|---|
| The signed Wilcoxon rank sum test. **p<0.01 | | | |

It was observed that despite containing lower amount of methyl salicylate, the median extracted amount of methyl salicylate tended to be higher for PE/PP compared to STAND. Also, the extracted fraction (%) of flavour (methyl salicylate) was significantly higher for PE/PP compared to STAND.

### Example 2

This example illustrates that a first nonwoven (A) comprising PP having a surface weight of 8 gsm generates a lower opacity in comparison to a standard material (STD) comprising viscose and binder and having a surface weight of 29 gsm.

The opacity was measured at Yc/2° spectral response using a ColorFlex EZ.

The measured opacity at Yc/2° spectral response is presented in Table 4.

**Table 4. Measurement of opacity.**

| | **Opacity** (at Yc/2° spectral response) |
|---|---|
| A | 20.2 |
| STD | 32.7 |

It was observed that the opacity at c/2° spectral response was significantly lower for A than for STD.

### Example 3

The example illustrates the improved seal strength of a pouch according to the present invention (INV) in comparison with a conventional pouch (CONV).

For the INV sample, which comprises of two nonwovens, the first nonwoven was PP having a surface weight of 8 gsm and the second nonwoven was viscose.

For the CONV sample, thermobonded nonwoven of viscose and binder, having a surface weight of 29 gsm was used.

Preparation of heat seals and determination of seal strength were performed according to a standard method ASTM F2029 and measured at 30 mm/min. Seals were achieved by means of a RDM laboratory heat sealer and the nonwoven, in the INV and CONV samples respectively, were welded during 0.21 s in a welding machine. Seal strength was determined by Instron force transducer.

The measured seal strength is presented in Table 5.

**Table 5. Measured seal strength.**

| | Seal strength (N/mm) |
|---|---|
| INV | 0.43 |
| CONV | 0.13 |

It was observed that the seal strength of INV was significantly higher that the seal strength for CONV.

## Claims

1. A pouched product (101) for oral use, comprising a saliva-permeable pouch and a filling material (102) contained by the pouch, wherein the pouch comprises a first nonwoven (103) enclosing the filling material, and a second nonwoven (104) surrounding the first nonwoven, wherein one or more opening(s) (105) is/are provided in the second nonwoven, through which opening(s) the first nonwoven is exposed.

2. The pouched product (101) according to claim 1, wherein the opening(s) (105) is/are formed by removal of portion(s) of the second nonwoven (104).

3. The pouched product (101) according to any one of the preceding claims, wherein the one or more opening(s) (105) has/have an opening area of at least 3 mm², preferably in the range from 3 mm² to 80 mm², such as in the range from 10 mm² to 60 mm², such as in the range from 20 mm² to 40 mm².

4. The pouched product (101) according to any one of the preceding claims, wherein the first nonwoven (103) comprises or consists of thermoplastic polymer fibres.

5. The pouched product (101) according to claim 4, wherein the thermoplastic polymer fibres are selected from the group consisting of polypropylene, polythene, polylactic acid, polyethylene terephthalate, polybutylene succinate and any combination thereof.

6. The pouched product (101) according to any one of the preceding claims, wherein the basis weight of the first nonwoven (103) is in the range of from 8 gsm to 27 gsm.

7. The pouched product (101) according to any one of the preceding claims, wherein the first nonwoven (103) is spunbonded.

8. The pouched product (101) according to any one of the preceding claims, wherein the second nonwoven (104) comprises or consists of cellulosic fibres, such as regenerated cellulose fibres, such as viscose fibres or lyocell fibres, such as viscose fibres.

9. The pouched product (101) according to any one of the preceding claims, wherein the second nonwoven (104) is hydroentangled.

10. The pouched product (101) according to any one of the preceding claims, wherein the second nonwoven (104) is free from binder, such as thermal binder, chemical binder, binder fibre, adhesives or chemicals bonding the nonwoven.

11. The pouched product (101) according to any one of the preceding claims, wherein the filling material comprises a smokeless non-tobacco material, such as a nicotine containing smokeless non-tobacco material, wherein the filling material preferably further comprises a flavour compound.

12. The pouched product according to any one of the preceding claims, wherein the filling material comprises a smokeless tobacco material, wherein the filling material preferably further comprises a flavour compound.

13. The pouched product according to any one of the preceding claims, wherein the filling material (102) comprises nicotine, and wherein the pouch is configured to allow for an extraction of nicotine, of from 35% to 90% of the nicotine initially present in the filling material within 30 minutes of usage.

14. The pouched product (101) according to any one of the preceding claims, wherein the first nonwoven (103) has an opacity of from 15 to 30 at Yc/2° spectral response measured with the method according to ASTM E1164.

15. The pouched product (101) according to any one of the preceding claims, wherein the pouch comprises two opposing end seals (111a, 111b), a seal strength of the end seals being equal to or above 0.1 N/mm, such as in the range from 0.3 N/mm to 0.7 N/mm as measured according to the sealing strength method disclosed herein.

## Patentansprüche

1. Beutelprodukt (101) zum oralen Gebrauch, umfassend einen speicheldurchlässigen Beutel und ein in dem Beutel enthaltenes Füllmaterial (102), wobei der Beutel ein erstes Vlies (103), das das Füllmaterial umschließt, und ein zweites Vlies (104), das das erste Vlies umgibt, umfasst, wobei in dem zweiten Vlies eine oder mehrere Öffnung(en) (105) vorgesehen ist/sind, wobei das erste Vlies durch die Öffnung(en) freigelegt ist.

2. Beutelprodukt (101) nach Anspruch 1, wobei die Öffnung(en) (105) durch Entfernen eines Abschnitts bzw. von Abschnitten des zweiten Vlieses (104) gebildet wird/werden.

3. Beutelprodukt (101) nach einem der vorhergehenden Ansprüche, wobei die eine oder die mehreren Öffnung(en) (105) eine Öffnungsfläche von wenigstens 3 mm², bevorzugt im Bereich von 3 mm² bis 80 mm², wie z. B. im Bereich von 10 mm² bis 60 mm², wie z. B. im Bereich von 20 mm² bis 40 mm², aufweist/aufweisen.

4. Beutelprodukt (101) nach einem der vorhergehenden Ansprüche, wobei das erste Vlies thermoplastische Polymerfasern umfasst oder daraus besteht.

5. Beutelprodukt (101) nach Anspruch 4, wobei die thermoplastischen Polymerfasern ausgewählt sind aus der Gruppe bestehend aus Polypropylen, Polyethylen, Polylactid, Polyethylenterephthalat, Polybutylensuccinat und einer beliebigen Kombination davon.

6. Beutelprodukt (101) nach einem der vorhergehenden Ansprüche, wobei das Flächengewicht des ersten Vlieses (103) im Bereich von 8 g/m² bis 27 g/m² liegt.

7. Beutelprodukt (101) nach einem der vorhergehenden Ansprüche, wobei das erste Vlies (103) spinngebunden ist.

8. Beutelprodukt (101) nach einem der vorhergehenden Ansprüche, wobei das zweite Vlies (104) Cellulosefasern, wie z. B. Celluloseregeneratfasern, wie z. B. Viskosefasern oder Lyocellfasern, wie z. B. Viskosefasern, umfasst oder daraus besteht.

9. Beutelprodukt (101) nach einem der vorhergehenden Ansprüche, wobei das zweite Vlies (104) hydroverfestigt ist.

10. Beutelprodukt (101) nach einem der vorhergehenden Ansprüche, wobei das zweite Vlies (104) frei von Bindemittel, wie z. B. thermischem Bindemittel, chemischem Bindemittel, Bindemittelfasern, Klebstoffen oder Chemikalien, die das Vlies verbinden, ist.

11. Beutelprodukt (101) nach einem der vorhergehenden Ansprüche, wobei das Füllmaterial ein rauchfreies Nichttabakmaterial, wie z. B. ein nikotinhaltiges rauchfreies Nichttabakmaterial, umfasst, wobei das Füllmaterial bevorzugt ferner eine Geschmacksstoffverbindung umfasst.

12. Beutelprodukt nach einem der vorhergehenden Ansprüche, wobei das Füllmaterial ein rauchfreies Tabakmaterial umfasst, wobei das Füllmaterial bevorzugt ferner eine Geschmacksstoffverbindung umfasst.

13. Beutelprodukt nach einem der vorhergehenden Ansprüche, wobei das Füllmaterial (102) Nikotin umfasst, und wobei der Beutel so ausgelegt ist, dass er eine Extraktion von Nikotin von 35 % bis 90 % des anfänglich in dem Füllmaterial vorhandenen Nikotins innerhalb von 30 Minuten Gebrauch ermöglicht.

14. Beutelprodukt (101) nach einem der vorhergehenden Ansprüche, wobei das erste Vlies (103) eine Lichtundurchlässigkeit von 15 bis 30 bei einer Spektralempfindlichkeit von Yc/2°, gemessen mit dem Verfahren gemäß ASTM E1164, aufweist.

15. Beutelprodukt (101) nach einem der vorhergehenden Ansprüche, wobei der Beutel zwei gegenüberliegende Enddichtungen (111a, 111b) umfasst, wobei eine Dichtungsstärke der Enddichtungen gleich oder größer als 0,1 N/mm ist, wie beispielsweise im Bereich von 0,3 N/mm bis 0,7 N/mm, gemessen gemäß dem hierin offenbarten Dichtungsstärkeverfahren.

## Revendications

1. Produit en sachet (101) destiné à un usage oral, comprenant un sachet perméable à la salive et un matériau de remplissage (102) contenu dans le sachet, dans lequel le sachet comprend un premier non-tissé (103) entourant le matériau de remplissage, et un deuxième non-tissé (104) entourant le premier non-tissé, dans lequel une ou plusieurs ouverture(s) est/sont prévues dans le deuxième non-tissé, ouverture(s) (105) à travers lesquelles le premier non-tissé est exposé.

2. Produit en sachet (101) selon la revendication 1, dans lequel la ou les ouverture(s) (105) est/sont formées par retrait d'une ou de portion(s) du deuxième non-tissé (104).

3. Produit en sachet (101) selon l'une quelconque des revendications précédentes, dans lequel les une ou plusieurs ouverture(s) (105) ont une aire d'ouverture d'au moins 3 mm², de préférence dans la plage de 3 mm² à 80 mm², telle que dans la plage de 10 mm² à 60 mm², telle que dans la plage de 20 mm² à 40 mm².

4. Produit en sachet (101) selon l'une quelconque des revendications précédentes, dans lequel le premier non-tissé (103) comprend ou est constitué de fibres polymères thermoplastiques.

5. Produit en sachet (101) selon la revendication 4, dans lequel les fibres polymères thermoplastiques sont choisies dans le groupe constitué par le polypropylène, le polyéthylène, l'acide polylactique, le polyéthylène téréphtalate, le polybutylène succinate et toute combinaison de ceux-ci.

6. Produit en sachet (101) selon l'une quelconque des revendications précédentes, dans lequel le grammage du premier non-tissé (103) est dans la plage de 8 g/m² à 27 g/m².

7. Produit en sachet (101) selon l'une quelconque des revendications précédentes, dans lequel le premier non-tissé (103) est filé-lié.

8. Produit en sachet (101) selon l'une quelconque des revendications précédentes, dans lequel le deuxième non-tissé (104) comprend ou est constitué de fibres cellulosiques, telles que des fibres de cellulose régénérée, telles que des fibres de viscose ou des fibres de lyocell, telles que des fibres de viscose.

9. Produit en sachet (101) selon l'une quelconque des revendications précédentes, dans lequel le deuxième non-tissé (104) est hydrolié.

10. Produit en sachet (101) selon l'une quelconque des revendications précédentes, dans lequel le deuxième non-tissé (104) est exempt de liant, tel qu'un liant thermique, un liant chimique, une fibre liante, des adhésifs ou des produits chimiques de liage du non-tissé.

11. Produit en sachet (101) selon l'une quelconque des revendications précédentes, dans lequel le matériau de remplissage comprend un matériau sans tabac sans fumée, tel qu'un matériau sans tabac sans fumée contenant de la nicotine, dans lequel le matériau de remplissage comprend de préférence en outre un composé d'arôme.

12. Produit en sachet selon l'une quelconque des revendications précédentes, dans lequel le matériau de remplissage comprend un matériau de tabac sans fumée, dans lequel le matériau de remplissage comprend de préférence en outre un composé d'arôme.

13. Produit en sachet selon l'une quelconque des revendications précédentes, dans lequel le matériau de remplissage (102) comprend de la nicotine, et dans lequel le sachet est configuré pour permettre une extraction de nicotine, de 35 % à 90 % de la nicotine initialement présente dans le matériau de remplissage dans les 30 minutes d'utilisation.

14. Produit en sachet (101) selon l'une quelconque des revendications précédentes, dans lequel le premier non-tissé (103) a une opacité de 15 à 30 à la réponse spectrale Yc/2° mesurée avec le procédé selon ASTM E1164.

15. Produit en sachet (101) selon l'une quelconque des revendications précédentes, dans lequel le sachet comprend deux scellements d'extrémité (111a, 111b) opposés, une résistance de scellement des scellements d'extrémité qui est égale ou supérieure à 0,1 N/mm, telle que dans la plage de 0,3 N/mm à 0,7 N/mm, telle que mesurée selon le procédé de résistance de scellement décrit dans la présente description.
